# EUROPEAN PATENT APPLICATION

(11) **EP 4 283 230 A1**
(43) Date of publication of application: **29.11.2023**
(21) Application number: 21920767.7
(22) Date of filing: 07.12.2021
(51) Int. Cl.: F25D 29/00, F25D 23/00

(54) **MASTER CONTROL BOARD MOUNTING ASSEMBLY AND REFRIGERATOR**

(30) Priority: 22.01.2021 CN 202110090457
(71) Applicant: Qingdao Haier Refrigerator Co., Ltd, Qingdao, Shandong 266101 (CN); Haier Smart Home Co., Ltd., Qingdao, Shandong 266101 (CN)
(72) Inventor: JI, Huaishuai, Qingdao, Shandong 266101 (CN); LIU, Min, Qingdao, Shandong 266101 (CN); FENG, Bindong, Qingdao, Shandong 266101 (CN); WANG, Chengzhi, Qingdao, Shandong 266101 (CN); YANG, Hanxing, Qingdao, Shandong 266101 (CN)
(74) Representative: Winter, Brandl - Partnerschaft mbB
(86) International application number: PCT/CN2021/135910
(87) International publication number: WO 2022/156393

(57) **Abstract**

The present invention provides a master control board mounting assembly and a refrigerator. The master control board mounting assembly comprises: a mounting box having a box body in which an accommodation cavity is formed and an opening provided at one side of the box body; and a mounting base drawably provided in the accommodation cavity from the opening in an opening direction of the opening, and provided with an inner mounting cavity for mounting a master control board. In the opening direction, the inner size of the end of the mounting box away from the opening is smaller than that of the opening, and the mounting base is position-limited at the end of the mounting box away from the opening. The present invention can greatly simplify maintenance steps, shorten maintenance time, and reduce maintenance costs.

## Description

### TECHNICAL FIELD

The present invention relates to a master control board mounting assembly and a refrigerator, and in particular, to a master control board mounting assembly and a refrigerator easy to repair.

### BACKGROUND

A master control board of an existing refrigerator is generally provided at a top of the refrigerator, and usually, a mounting box for accommodating and mounting the master control board is provided at the top of the refrigerator; however, internal sizes of most mounting boxes are matched with sizes of the master control boards, and once the master control board breaks down, the master control board is required to be dismounted, and an interior of the mounting box is narrow, such that the master control board is difficult to dismount, and great difficulty is brought to repair of the refrigerator.

In view of this, an existing master control board mounting assembly and the existing refrigerator are necessary to be improved to solve the above-mentioned problem.

### SUMMARY

An object of the present invention is to provide a master control board mounting assembly easy to repair and a refrigerator.

The present invention is directed to a master control board mounting assembly, comprising: a mounting box having a box body provided with an accommodating cavity and an opening provided on one side of the box body; and a mounting base drawn from the opening in an opening direction of the opening and provided in the accommodating cavity, an inner mounting cavity for mounting a master control board being provided on the mounting base; wherein in the opening direction, a size of a part of an interior at an end of the mounting box apart from the opening is less than a size of a part of the interior at the opening, and the mounting base is limited at the end of the mounting box apart from the opening.

Further, the mounting box has a top wall, a bottom wall and two side walls which form the accommodating cavity, a step portion is formed on at least one side wall at the end of the mounting box apart from the opening and protrudes into the accommodating cavity, and the step portion is provided with an abutting portion laterally abutting against the mounting base and a guide inclined surface located on a side of the abutting portion close to the opening, so as to guide movement of the mounting base.

Further, the mounting base is provided with an elastic portion elastically abutting against and fitted with the abutting portion.

Further, the mounting base has a carrying bottom wall and two outer side walls extending upwards from two sides of the carrying bottom wall respectively, the elastic portion is configured as an elastic sheet integrally formed on the outer side wall, and a guide portion fitted with the guide inclined surface in a backward mounting and moving process of the mounting base is formed on a rear side of the elastic sheet.

Further, the mounting box has a top wall, a bottom wall and two side walls which form the accommodating cavity, step portions are formed on the top wall and/or the bottom wall at the end of the mounting box apart from the opening and protrude into the accommodating cavity, and the step portion is provided with an abutting portion abutting against the mounting base and a guide inclined surface located on a side of the abutting portion close to the opening, so as to guide movement of the mounting base.

Further, the mounting base is provided with an elastic portion elastically abutting against and fitted with the abutting portion.

Further, the mounting base has a carrying bottom wall, two outer side walls extending upwards from two sides of the carrying bottom wall respectively, and a rear side wall, the elastic portion is provided at a corner between the outer side wall and the rear side wall, the mounting base is provided with a supporting wall provided in parallel with the rear side wall at the corner, and the elastic portion is formed at a top of the supporting wall and has a V shape which is opened downwards.

Further, the step portions are formed on two side walls of the mounting box, a wire harness passing hole which is through laterally is formed in a front side of the step portion, a wiring port opposite to the wire harness passing hole is formed in the mounting base, and the wiring port is communicated with the inner mounting cavity.

Further, the mounting base further comprises an outer mounting cavity provided beside the inner mounting cavity to accommodate a wire harness, inner vertical walls provided between the inner mounting cavity and the outer mounting cavity, a wire passing port provided between the inner vertical walls and a wire binding portion formed by protruding from an inner wall of the outer mounting cavity, and the wiring port is communicated with the inner mounting cavity through the outer mounting cavity and the wire passing port.

Further, the outer mounting cavity surrounds two sides and a rear side of the inner mounting cavity and is located on a side adj acent to the wire harness passing hole of the mounting box, the outer mounting cavity comprises a first cavity adjacent to the outer side wall, a second cavity adjacent to the inner vertical wall, and a partition wall provided between the first cavity and the second cavity, the wiring port is provided on the outer side wall and communicated with the first cavity, the first cavity is communicated with a part of the outer mounting cavity adjacent to the rear side wall of the mounting base, the partition wall has a wiring groove communicating the first cavity with the second cavity, and the second cavity is communicated with the inner mounting cavity through the wire passing port between an end portion of the partition wall and one inner vertical wall.

Further, the mounting base further has a supporting portion protruding from a bottom wall of the inner mounting cavity, limiting buckles oppositely arranged on an upper side of the supporting portion and a master control board fixing space formed between the supporting portion and the limiting buckles, and the limiting buckles are formed on an inner wall of the inner mounting cavity.

Further, the mounting box further has a mounting portion provided at a position of the box body adjacent to the opening, the mounting portion is provided with screw holes, two sides of a front end of the mounting base are provided with fixing tabs protruding outwards, the fixing tabs are provided with fixing holes corresponding to the screw holes, and the master control board mounting assembly further comprises bolts fitted with the screw holes and the fixing holes.

The present invention is directed to a refrigerator, comprising a cabinet, a door located on a front side of the cabinet to open or close the cabinet, and the master control board mounting assembly, the master control board mounting assembly is provided in the cabinet or the door.

The present invention has the following beneficial effects. In the refrigerator according to the present invention, the lower side of the damper and the horizontal plane form the included angle. When condensation occurs in the damper groove, the condensation around the damper groove can flow to a corner of the damper groove along a groove wall, and in conjunction with a drainage structure, a risk of freezing the damper can be effectively reduced.

### BRIEF DESCRIPTION OF THE DRAWINGS

FIG. 1 is a schematic perspective diagram of a refrigerator according to a first embodiment of the present invention.
FIG. 2 is a perspective exploded view of FIG. 1.
FIG. 3 is a schematic perspective diagram of FIG. 1 from another perspective after a casing is hidden.
FIG. 4 is an enlarged view at A of FIG. 3.
FIG. 5 is a further perspective exploded view of FIG. 2.
FIG. 6 is a perspective exploded view of a mounting box and a mounting base of FIG. 5.
FIG. 7 is an enlarged view at B of FIG. 6.
FIG. 8 is a schematic perspective diagram of FIG. 5 from another perspective.
FIG. 9 is a perspective exploded view of a mounting box and a mounting base of FIG. 8.
FIG. 10 is an enlarged view at C of FIG. 9.
FIG. 11 is a front exploded view after an inner liner and a casing body are hidden.
FIG. 12 is a perspective exploded view of a mounting base and a display control assembly in a second embodiment of the present invention.
FIG. 13 is a schematic perspective diagram of FIG. 12 from another perspective.

### DETAILED DESCRIPTION

In order to make those skilled in the art to better understand the technical solutions of the present invention, the technical solutions in the embodiments of the present invention are clearly and completely described with reference to the accompanying drawings in the embodiments of the present invention, and apparently, the described embodiments are not all but only a part of the embodiments of the present invention. All other embodiments obtained by a person of ordinary skill in the art based on the embodiments of the present invention without creative efforts shall fall within the protection scope of the present invention.

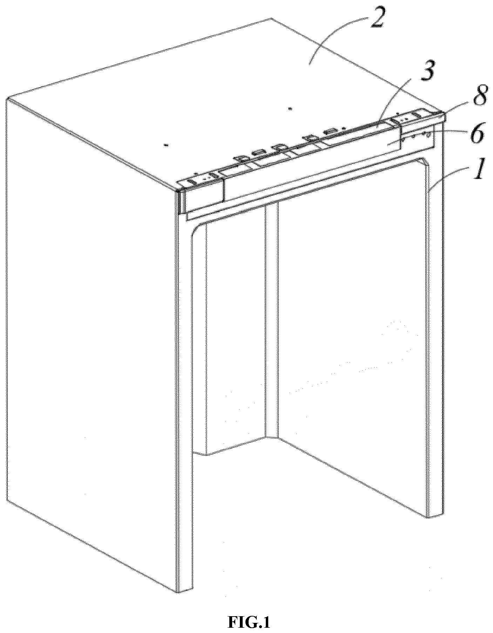

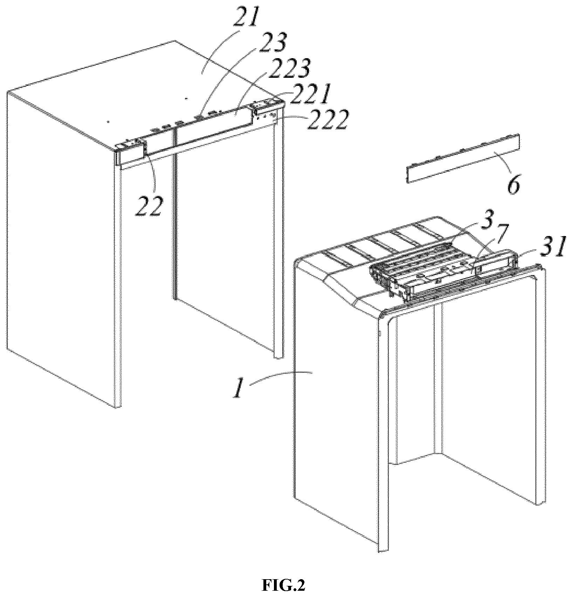

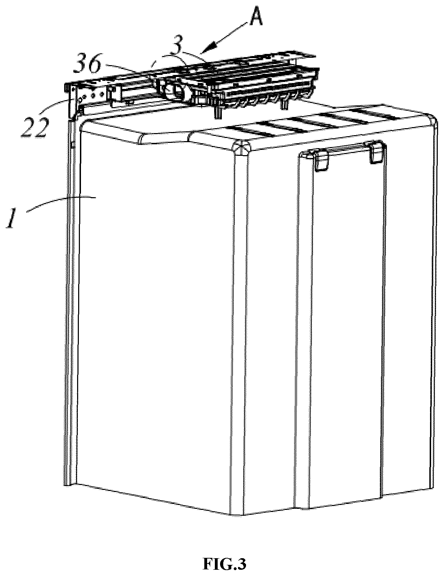

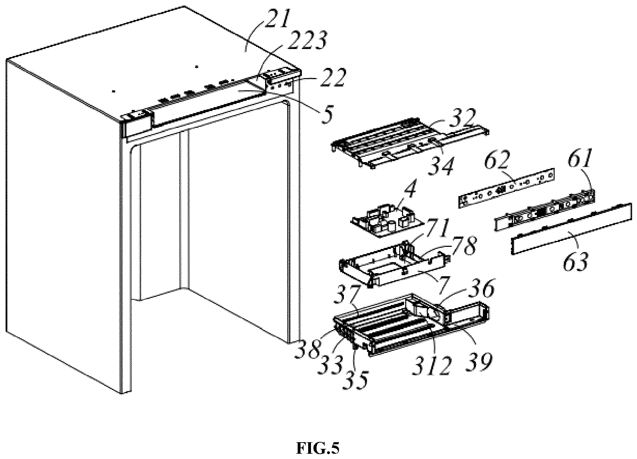

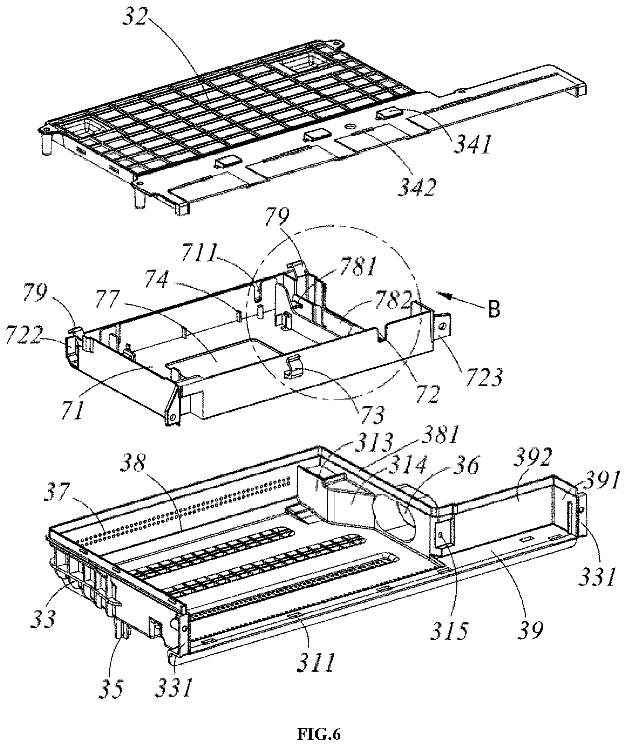

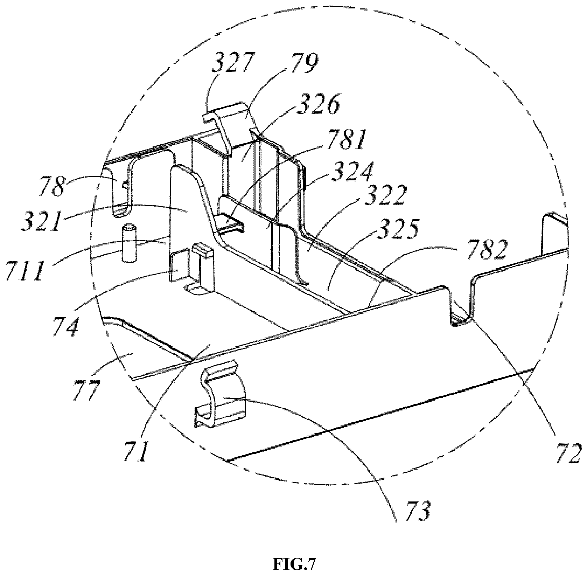

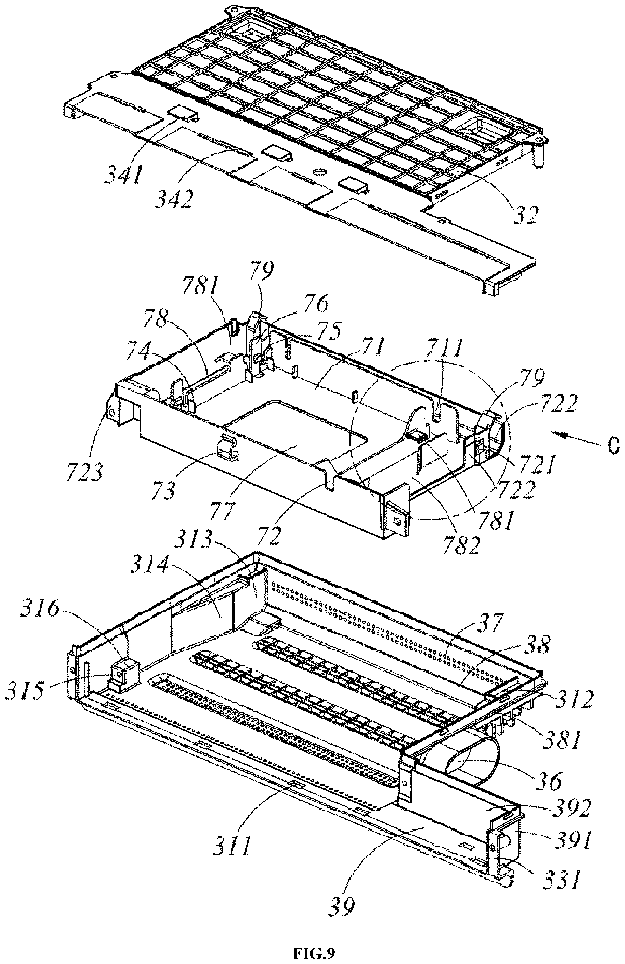

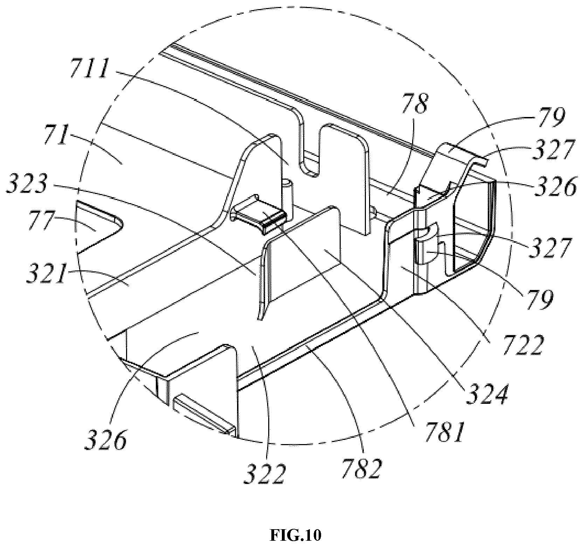

Reference is made to FIGS. 1 to 13 which show embodiments of a master control board mounting assembly according to the present invention, and the master control board mounting assembly comprises: a mounting box 3 having a box body provided with an accommodating cavity and an opening 31 provided on one side of the box body; and a mounting base 7 drawn from the opening 31 in an opening direction of the opening 31 and provided in the accommodating cavity, an inner mounting cavity 71 for mounting a master control board 4 being provided on the mounting base 7; wherein in the opening direction, a size of a part of an interior at an end of the mounting box 3 apart from the opening is less than a size of a part of the interior at the opening, and the mounting base 7 is limited at the end of the mounting box 3 apart from the opening.

The master control board mounting assembly is mainly applied to a refrigerator, the refrigerator comprises a cabinet and a door located on a front side of the cabinet to open or close the cabinet, and the cabinet comprises an inner liner 1 and a casing 2 located on an outer side of the inner liner 1. In the present embodiment, the master control board mounting assembly is provided in the cabinet, and it should be noted that the arrangement in the cabinet means an arrangement between the casing 2 and the inner liner 1, and certainly, the master control board mounting assembly can be provided in the door. The refrigerator is configured as an embedded refrigerator and mainly provided in a cupboard, and certainly, the refrigerator can be configured as a traditional refrigerator. Moreover, the master control board assembly can be applied to other devices, such as a freezer, a wine cabinet and even devices with master control boards in other technical fields.

Specifically, as shown in FIGS. 1 to 3 which show a first embodiment of the present invention, in the present embodiment, a foaming cavity 5 is formed between the casing 2 and the inner liner 1, the refrigerator further has a heat insulating layer provided between the casing 2 and the inner liner 1 adjacent to the mounting box 3, and the heat insulating layer can be formed in the foaming cavity 5 by foaming or have a vacuum heat insulating design.

In the present embodiment, the casing 2 comprises an assembled casing body 21, and a reinforcing beam 22 provided on a front side of the casing body 21, the reinforcing beam 22 has a first wall 221 extending in a front-rear direction, and a second wall 222 formed by bending from the first wall 221 towards the inner liner 1 (that is, bent and extending in an up-down direction), and the opening 31 of the mounting box 3 penetrates through the second wall 222 forwards. The first wall 221 of the reinforcing beam 22 is fixed to a top wall of the casing 2, the second wall 222 is fixed to a part of a side wall of the casing 2 bent in a transverse direction, and the whole reinforcing beam 22 is fixed inside the casing 2 and provided at a foremost end of the casing 2, thereby increasing integrity of the casing 2.

Since the mounting box 3 in the present invention is provided between the top wall of the casing 2 and the inner liner 1, by independently providing the reinforcing beam 22, the casing body 21 and the inner liner 1 can be conveniently connected, structural strength of the mounting box 3 is improved, a process is simpler, and a production efficiency is higher. Certainly, in other embodiments, the casing body 21 and the reinforcing beam 22 can be integrally formed.

A mounting notch 223 opened forwards is provided at a position of the casing 2 adjacent to the opening 31 of the mounting box 3, and in the present embodiment, the mounting notch 223 is provided on the first wall 221 of the reinforcing beam 22 and is through in the up-down direction. That is, it can be understood that the mounting notch 223 is formed by recessing a front end of the first wall 221 backwards. A part of the mounting box 3 corresponding to the mounting notch 223 protrudes into the mounting notch 223 and covers an inner wall of the mounting notch 223. That is, the inner wall of the mounting notch 223 is provided to be fitted with an outer wall of the mounting box 3. A position where the opening 31 of the mounting box 3 penetrates through the second wall 222 is communicated with the mounting notch 223, such that an upper front end of the mounting box 3 is exposed outside.

Therefore, during repair, a repair person cannot touch the reinforcing beam 22, and even when the opening 31 of the mounting box 3 is not quite large, the repair person can only touch a plastic structure of the mounting box 3, such that the repair person cannot be scratched by a metal structure of the reinforcing beam 22, thus reducing an injury risk of the repair person. Certainly, in other embodiments, the mounting box 3 may not protrude into the mounting notch 223; that is, the outer wall of the mounting box 3 is provided to be attached to an inner wall surface of the first wall 221.

The mounting box 3 is provided between the top wall of the casing 2 and the inner liner 1. On the one hand, since an area of the top wall is less than an area of the side wall, the foaming cavity 5 between the top wall and the inner liner 1 can be easily thickened to prevent the mounting box 3 from protruding from the casing 2, and the foaming cavity 5 between the thickened top wall and the inner liner 1 has a lower cost compared with the foaming cavity 5 between the thickened side wall and the inner liner 1.

On the other hand, generally, a storage compartment on an upper side of the refrigerator is configured as a refrigerating chamber, and has a relatively higher storage temperature than a freezing chamber, such that the temperature of the refrigerating chamber is not prone to influence work of the master control board 4. Meanwhile, with the master control board 4 provided at this position, the repair person is not required to bend down for work, thus reducing repair difficulty.

Certainly, in other embodiments, the mounting box 3 can be provided in the foaming cavity 5 between the side wall and the inner liner 1, or the foaming cavity 5 between the refrigerating chamber and the freezing chamber. When the mounting box 3 is provided in the foaming cavity 5 between the side wall and the inner liner 1, only part of the mounting box 3 can be provided to protrude from the side wall of the casing 2, and then, the cupboard is provided with an accommodating structure fitted with the protruding structure. When the mounting box 3 is provided in the foaming cavity 5 between the refrigerating chamber and the freezing chamber, a heat insulating performance of the mounting box 3 should be increased to reduce an influence of a low temperature of the freezing chamber thereon.

In the present embodiment, the mounting box 3 is provided adjacent to the inner wall of the casing 2; that is, the mounting box 3 is attached to the top wall of the casing 2, such that a distance between a bottom of the mounting box 3 and the inner liner 1 can be increased, thereby increasing a thickness of the heat insulating layer therebetween, and then reducing the influence of the temperature in the storage compartment on the master control board; heat generated when the master control board 4 works can be conducted out through the casing 2 made of metal, thus improving a heat dissipation effect. Meanwhile, under a condition of a sufficient heat preservation effect, the distance between the top wall of the casing 2 and the inner liner 1 can be minimized; that is, the foaming cavity 5 is thinnest, and a size of the refrigerator is reduced.

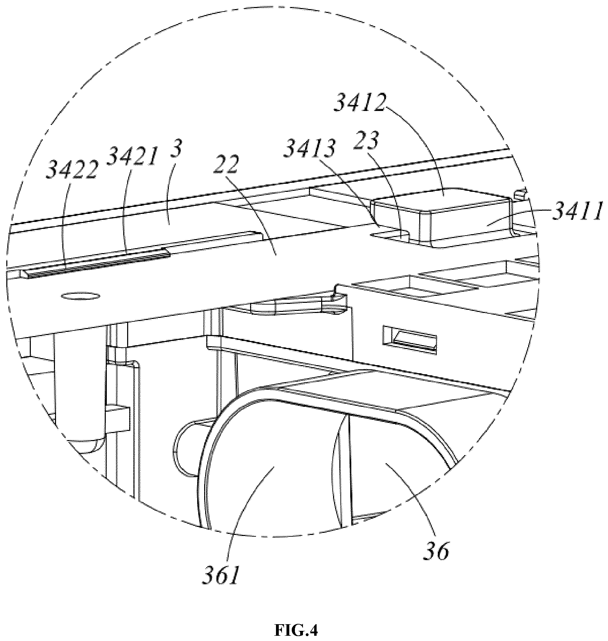

As shown in FIGS. 4 to 9, the mounting box 3 comprises an upper cover 32 and a lower cover 33 which are assembled to each other up and down, such that molding and assembly are simpler. Certainly, in other embodiments, the mounting box 3 can be integrally formed.

The refrigerator further comprises a prepositioning structure for assembling the mounting box 3 and the casing 2 to each other. The prepositioning structure is provided between the mounting box 3 and the casing 2 and located on a front side of the mounting box 3, and comprises a clamping structure 34 provided on one of the mounting box 3 and the casing 2 and a fitting structure 23 provided on the other of the mounting box 3 and the casing 2.

In the present embodiment, the fitting structure 23 is provided in a through hole of the casing 2, and the through hole penetrates through the casing body 21 and the first wall 221 of the reinforcing beam 22 in the up-down direction. The clamping structure 34 comprises a first clamping portion 341 fixed to the fitting structure 23, and a second clamping portion 342 located on a front side of the first clamping portion 341 and fixed to a front end wall of the casing 2 (i.e., a front end wall of the first wall 221 of the reinforcing beam 22). The prepositioning structure comprises a plurality of through holes provided in the transverse direction, the first clamping portion 341 and the second clamping portion 342.

The first clamping portion 341 and the second clamping portion 342 are provided on the upper cover 32, and clamping cavities of the first clamping portion 341 and the second clamping portion 342 are provided oppositely. During pre-fixation, the first clamping portion 341 is obliquely placed in the through hole from bottom to top and moved forwards, and then, the mounting box 3 is lifted and pushed backwards, such that the second clamping portion 342 is clamped on the front end wall of the casing 2 (i.e., the front end wall of the reinforcing beam 22).

By providing the first clamping portion 341 and the second clamping portion 342, on the one hand, a bearing capacity of the clamping structure 34 can be increased, and a risk of damage to the first clamping portion 341 and the second clamping portion 342 can be reduced. On the other hand, a screw fixing mode is avoided, screws penetrate through the upper cover 32 to damage the master control board 4 in the mounting box 3, and meanwhile, the repair person can be prevented from being scratched by the screws.

By providing the prepositioning structure, the mounting box 3 and the casing 2 can be fixed firstly, hole positions between the mounting box 3 and the casing 2 can be aligned, and then, fixation is further performed using screws at other positions, such that the mounting box 3 is not required to be held with the hand during fixation by the screws, thus improving an assembly efficiency.

Specifically, the first clamping portion 341 has an extending portion 3411 perpendicularly extending from an outer wall surface of the mounting box 3 towards the casing 2, a buckling portion 3412 extending from the extending portion 3411 towards the mounting notch 223, and a first buckling cavity 3413 formed between the buckling portion 3412 and the outer wall surface of the mounting box 3, and a height of a part of an inner cavity of the first buckling cavity 3413 close the mounting notch 223 is greater than a height of a part of the inner cavity adj acent to the extending portion 3411.

The buckling portion 3412 has a greater extension length than the extending portion 3411, and an inclined surface extending obliquely towards an interior of the first buckling cavity 3413 is formed at an end of the buckling portion 3412 close to the mounting notch 223.

The second clamping portion 342 has an engaging portion 3421 extending further towards the first clamping portion 341, a second buckling cavity for accommodating an edge of the mounting notch 223 of the casing 2 is formed between the engaging portion 3421 and the outer wall surface of the mounting box 3, and an inclined guide surface 3422 is formed on a side of an extending tail end of the engaging portion 3421 apart from the second buckling cavity.

The first clamping portion 341 and the second clamping portion 342 are staggered in a width direction of the mounting box 3, such that the above structure is conveniently formed in a limited space of the mounting box 3.

In the present embodiment, the mounting box 3 has supporting legs 35 protruding downwards from a lower surface of the lower cover 33 to be supported on the inner liner 1, and the supporting legs 35 can assist the prepositioning structure, improve a prepositioning effect, and meanwhile reduce a risk of damage to the clamping structure 34.

The mounting box 3 has a wire harness passing hole 36 for providing a wire harness, and in the present embodiment, the wire harness passing hole 36 is located on a transverse side, and due to the arrangement on the transverse side, during repair by the repair person, the wire harness is relatively closer to the repair person, such that the repair person can conveniently perform a check and repair. Certainly, in other embodiments, the wire harness passing hole can be located on a rear side.

The mounting box 3 has a ventilation hole 37 for communicating the foaming cavity 5 with the interior of the mounting box 3. The refrigerator further comprises a breathable film (not shown) provided at the ventilation hole 37 on an outer side of the mounting box 3. In the present embodiment, the ventilation hole 37 is mainly provided on the lower cover 33. By providing the ventilation hole 37 and the breathable film, during foaming, communication with the external world can be realized to reduce a foaming pressure, such that the foaming process is smoother; the breathable film can ensure that a foaming material cannot enter the mounting box 3, thus avoiding a risk of material spilling of the mounting box 3.

A step portion 312 is formed on at least one side wall at the end of the mounting box 3 apart from the opening 31 and protrudes into the accommodating cavity, the step portion 312 is formed to protrude in the transverse direction, and the step portion 312 is provided with an abutting portion 313 laterally abutting against the mounting base 7 and a guide inclined surface 314 located on a side of the abutting portion 313 close to the opening 31. In the present embodiment, in addition to the step portion 312 protruding in the transverse direction, the step portions 312 can be formed on a top wall and/or a bottom wall of the end of the mounting box 3 apart from the opening 31 and protrude into the accommodating cavity. Certainly, in other embodiments, the step portion 312 in the transverse direction, the step portion 312 on the top wall, and the step portion 312 on the bottom wall can be selectively provided according to the structure of the mounting box 3; for example, the step portion is only provided in the transverse direction or only provided on the top wall or the bottom wall.

In the present embodiment, the accommodating cavities comprise a first accommodating cavity 38 located on the rear side and a second accommodating cavity 39 located on the front side, the first accommodating cavity 38 is communicated with the second accommodating cavity 39, a width of the second accommodating cavity 39 in the transverse direction is greater than a width of the first accommodating cavity 38 in the transverse direction, and the first accommodating cavity 38 is configured to accommodate the master control board 4. One end of the second accommodating cavity 39 is aligned with the first accommodating cavity 38, such that a rear inner wall of the second accommodating cavity 39 is located on only one side in the transverse direction, and meanwhile, the wire harness passing hole 36 of the mounting box 3 is provided on a rear side of a part of the second accommodating cavity 39 longer than the first accommodating cavity 38.

The mounting box 3 further has two front side walls 391 formed on both sides of the second accommodating cavity 39, a front top wall and a front bottom wall formed on an upper side and a lower side of the second accommodating cavity 39 respectively, two rear side walls 381 formed on both sides of the first accommodating cavity 38, a connecting wall 392 for connecting a rear end of the front side wall 391 and a front end of the rear side wall 381 on the same side, and a rear top wall and a rear bottom wall formed on an upper side and a lower side of the first accommodating cavity 38 respectively, the front top wall and the rear top wall are located on the same plane, and the front bottom wall and the rear bottom wall are located on the same plane. The front top wall and the rear top wall are formed on the upper cover 32, and the front bottom wall and the rear bottom wall are formed on the lower cover 33.

In the present embodiment, the connecting wall 392 is located on a rear side of the second accommodating cavity 39, the connecting wall 392 is formed between the front side wall 391 and the rear side wall 381 on one side, and the front side wall 391 and the rear side wall 381 on opposite sides are located on the same plane. That is, one side of the first accommodating cavity 39 and one side of the second accommodating cavity 38 in the transverse direction are flush, and only the other side of the first accommodating cavity 39 is longer than the other side of the second accommodating cavity 38.

The mounting box 3 has an extension wall 361 protruding outwards from a periphery of the wire harness passing hole 36 of the rear side wall 381, and the extension wall 361 is provided around the wire harness passing hole 36. Therefore, the extension wall 361 can facilitate other wire harnesses to go deep into the mounting box 3, and meanwhile facilitate sealing with respect to other structures, so as to prevent the foaming material from permeating through the wire harness passing hole 36.

The mounting box 3 further has a mounting portion 316 provided at a position of the box body adjacent to the opening, and the mounting portion 316 is provided with a screw hole 315; in the present embodiment, the mounting box 3 has two mounting portions 316 arranged on left and right sides respectively, the mounting portion 316 on one side is formed on the rear inner wall of the second accommodating cavity 39, and the mounting portion 316 on the other side is configured as a protrusion protruding from the mounting box 3.

The refrigerator further comprises a display control assembly 6 fitted at the opening 31 and electrically connected with the master control board 4, and the second accommodating cavity 39 is configured to accommodate the display control assembly 6; on the one hand, the display control assembly 6 has a greater transverse width than the master control board 4, and the second accommodating cavity 39 facilitates mounting of the display control assembly 6; on the other hand, during repair, the second accommodating cavity 39 is provided on the front side of the mounting box 3, and the repair person has a larger operation space and can more conveniently perform repair. Certainly, in other embodiments, a cover plate can be fitted at the opening 31, and is only required to cover the master control board 4.

Specifically, the display control assembly 6 comprises a display control bracket 61, a display control circuit board 62 fixed on the display control bracket 61, and a display control panel 63 covering a front side of the display control bracket 61, the refrigerator further comprises a fixing structure provided between the display control panel 63 and the mounting box 3, and the fixing structure comprises a hook 64 provided on one of the display control panel 63 and the mounting box 3 and a clamping groove 311 provided on the other of the display control panel 63 and the mounting box 3.

In the present embodiment, the hook 64 is provided on the display control panel 63, the clamping groove 311 is provided on an inner wall of the mounting box 3, and the display control bracket 61 and the display control panel 63 are fixed together, such that the display control panel 63 can be directly detached during repair, and meanwhile, the display control bracket 61 and the display control circuit board 62 are detached together, thereby simplifying repair steps. The display control assembly 6 is provided on a front side of the master control board 4, thus reducing a length of a wire harness between the display control assembly 6 and the master control board 4, and facilitating a reasonable arrangement and tidying of the wire harness. Moreover, the display control assembly 6 is provided at the opening 31 of the mounting box 3, and can further function as the cover plate to cover the master control board 4; that is, the display control assembly 6 and the cover plate are integrated.

The mounting box 3 further has extending sheets 331 extending from the two front side walls to both sides, and the extending sheets 331 are provided with mounting holes for fixing the reinforcing beam 22, thereby further reinforcing fixation of the mounting box 3. In the present embodiment, left and right sides of the display control panel 63 extend to front sides of the extending sheets 331, such that the extending sheets 331 can stop the display control panel 63 from further moving backwards, thereby preventing the display control assembly 6 from pressing the master control board assembly; meanwhile, the mounting holes can be shielded, thereby increasing an aesthetic degree.

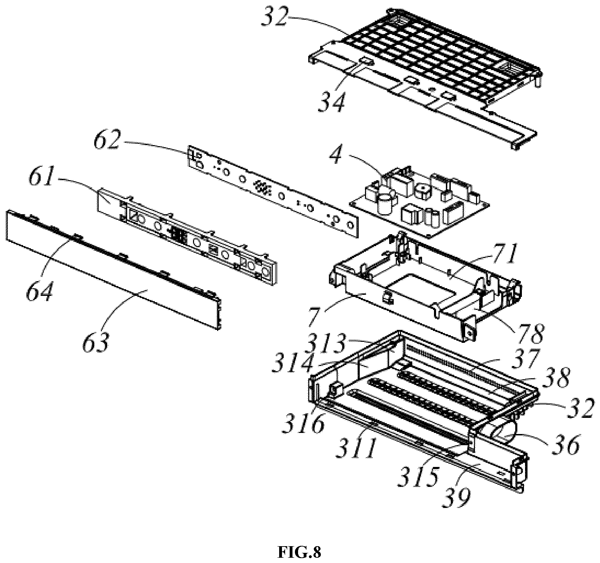

As shown in FIGS. 8 to 10, in the present embodiment, the mounting base 7 has a structure similar to a drawer, the mounting base 7 has a carrying bottom wall and two outer side walls extending upwards from two sides of the carrying bottom wall respectively, a front wall of the mounting base 7 further has a front-back through wire passing hole 72 and a wire binding clip 73 protruding forwards to fix a wire harness, the wire harness connecting the display control assembly 6 and the master control board 4 passes through the wire passing hole 72, and the wire binding clip 73 is configured to tidy the wire harness.

The wire passing hole 72 is located on a transverse side of the front wall of the mounting base 7, the wire passing hole 72 and the wire harness passing hole 36 of the mounting box 3 are located on the same side, and the wire binding clip 73 is approximately located at a middle position of the front wall of the mounting base 7. Therefore, the wire harness passing through the wire passing hole 72 can be directly connected with the wire harness passing through the wire harness passing hole 36, a length of the wire harness is shortened, and then, the wire harness is orderly arranged by the wire binding clip 73.

The mounting base 7 further has a supporting portion 74 protruding from an inner bottom wall of the inner mounting cavity 71 to support the master control board 4. In the present embodiment, the mounting base 7 has a plurality of supporting portions 74 provided around the inner mounting cavity 71, and the supporting portions 74 are further connected to an inner side wall around the inner mounting cavity 71, so as to increase structural strength of the supporting portions 74. The supporting portion 74 can be configured to increase a distance between the master control board 4 and a bottom wall of the inner mounting cavity 71, so as to avoid that when condensation occurs in the mounting base 7, the condensation comes into contact with the master control board 4, and ensure that the master control board 4 works stably.

The mounting base 7 further has limiting buckles 75 protruding from an inner wall of the inner mounting cavity 71, the limiting buckles 75 are oppositely provided on an upper side of the supporting portion 74, a fixing space is formed between the limiting buckles 75 and the supporting portion 74 to fix the master control board 4, and the limiting buckle 75 has a guide surface facilitating up-down mounting of the master control board 4.

In the present embodiment, each of other side walls of the inner mounting cavity 71 than a front wall is provided with an elastic arm 76, the elastic arm 76 is configured as a part of the side wall of the inner mounting cavity 71, both sides of the elastic arm 76 are spaced apart from the side wall of the inner mounting cavity 71, and the limiting buckle 75 is provided on the elastic arm 76, such that the elastic arm 76 moves close to or away from the inner mounting cavity 71 easily, and the master control board 4 is easier to mount and dismount.

Certainly, in other embodiments, the mounting base 7 may not have the front wall, and the master control board 4 can be mounted between the limiting buckle 75 and the supporting portion 74 along the front-rear direction.

In the present embodiment, the mounting base 7 further has a through hole 77 which is through in the up-down direction to expose the bottom of the master control board 4; the arrangement of the through hole 77 can reduce a material cost of the mounting base 7 and improve a heat dispersion performance, and meanwhile can further increase the original distance between the master control board 4 and the inner bottom wall of the inner mounting cavity 71 to become a distance between the master control board 4 and the lower cover 33 of the mounting box 3; even when the condensation appears, the condensation can flow into the mounting box 3 through the through hole 77, thereby further improving a waterproof performance.

The mounting base 7 further comprises an outer mounting cavity 78 provided beside the inner mounting cavity 71 to accommodate the wire harness, and a wire binding portion 781 protruding from an inner wall of the outer mounting cavity 78. In the present embodiment, the outer mounting cavity 78 surrounds left and right sides and a rear side of the inner mounting cavity 71, and is located on one side of the wire harness passing hole 36 of the mounting box 3. The outer mounting cavity 78 means a space formed by outermost side walls of the mounting base 7 in the transverse direction and the front-rear direction and the side wall of the inner mounting cavity 71, thereby providing a large space for arranging the wire harness; the wire binding portion 781 is formed by protruding from the inner wall of the outer mounting cavity 78.

The mounting base 7 has a wiring port 782 provided on the outer mounting cavity 78 close to the wire harness passing hole 36 side, and the wiring port 782 is communicated with the inner mounting cavity 71. The mounting base 7 further has an inner vertical wall 321 provided between the inner mounting cavity 71 and the outer mounting cavity 78, and a wire passing port 711 fitted with the wiring port 782. In the present embodiment, the inner vertical walls 321 are configured as left and right side walls and a rear side wall forming the inner mounting cavity 71.

The outer mounting cavity comprises a first cavity 322 adjacent to the outer side wall of the mounting base 7, a second cavity 323 adj acent to the inner vertical wall 321, and a partition wall 324 provided between the first cavity 322 and the second cavity 323. In the present embodiment, the first cavity 322, the second cavity 323, and the partition wall 324 are arranged near the wire harness passing hole 36 side, thereby facilitating distribution and wiring of different wire harnesses entering through the wire harness passing hole 36. Certainly, the first cavity 322, the second cavity 323 and the partition wall 324 can be arranged at other positions.

The wiring port 782 is provided on the outer side wall of the mounting base 7 and communicated with the first cavity 322, and the first cavity 322 is communicated with a part of the outer mounting cavity adjacent to the rear side wall of the mounting base. The partition wall 324 has a wiring groove 325 communicating the first cavity 322 with the second cavity 323, and the second cavity 323 is communicated with the inner mounting cavity through the wire passing port 711 between an end portion of the partition wall 324 and one inner vertical wall 321. In the present embodiment, the wiring groove 325 is provided through the partition wall 324 along the transverse direction, and the wire passing port 711 is located between the inner vertical wall 321 in the transverse direction and the rear inner vertical wall 321.

The mounting base 7 is provided with an elastic portion 79 elastically abutting against and fitted with the step portion 312, and an escaping space 722 for deformation of the elastic portion 79, the elastic portion 79 is configured as an elastic sheet integrally formed on the mounting base 7, and the elastic sheet is provided with a guide portion 327 fitted with the guide inclined surface 314 in a backward mounting and moving process of the mounting base 7. The arrangement of the elastic portion 79 not only facilitates front-rear pushing and pulling of the mounting base 7, but also strengthens a fixed effect on the mounting base 7. Certainly, in other embodiments, the elastic portion 79 may not be provided, and only the mounting base 7 and the step portion 312 can be in interference fit.

In the present embodiment, the mounting base 7 comprises a plurality of elastic portions 79 provided on the left and right outer side walls and above the mounting base 7; the elastic portion 79 above the mounting base 7 is provided at a corner between the outer side wall and the rear side wall of the mounting base 7, the mounting base 7 is provided with a supporting wall 326 provided in parallel with the rear side wall at the corner, and the elastic portion 79 is formed at a top of the supporting wall 326 and has a V shape which is opened downwards. Therefore, when the mounting base 7 is pulled out forwards to release fixation to the abutting portion 313, the mounting base 7 has enough spaces to move around, which not only can increase fixation strength, but also facilitates disassembly, and is also beneficial to heat dissipation.

In the present embodiment, the step portion 312 is provided at a rear end inside the mounting box 3, and the elastic portion 79 is also formed at the rear end of the mounting base 7. Therefore, the movement space of the first half of the interior of the mounting box 3 can be maximized, thereby guaranteeing smooth detachment of the mounting base 7.

Besides the above-mentioned fixation of the step portion 312 and the elastic portion 79, the mounting base 7 and the mounting box 3 are fixed by another part; specifically, two sides of the front end of the mounting base 7 are provided with fixing tabs 723 protruding outwards, the fixing tabs 723 are provided with fixing holes corresponding to the screw holes 315 on the mounting portion 316, and the master control board mounting assembly further comprises bolts fitted with the screw holes 315 and the fixing holes. Therefore, by fixing the step portion 312 and the elastic portion 79, and fixing the fixing tab 723 and the mounting portion 316, the mounting base 7 can be effectively guaranteed to be fixed firmly.

The rear inner wall of the second accommodating cavity 39 is further provided with a groove which is recessed backwards to accommodate the fixing tab 723, such that a front end surface of the fixing tab 723 is flush with the rear inner wall, and smooth mounting of the display control assembly 6 is guaranteed.

The refrigerator further comprises appearance parts 8 provided on left and right sides of the display control assembly 6, and the appearance parts 8 are fixed on the reinforcing beam 22, thus preventing the reinforcing beam 22 from being exposed, and improving the aesthetic degree. The appearance parts 8 on the left and right sides have inconsistent sizes, and the appearance part 8 on a door hinge side is smaller.

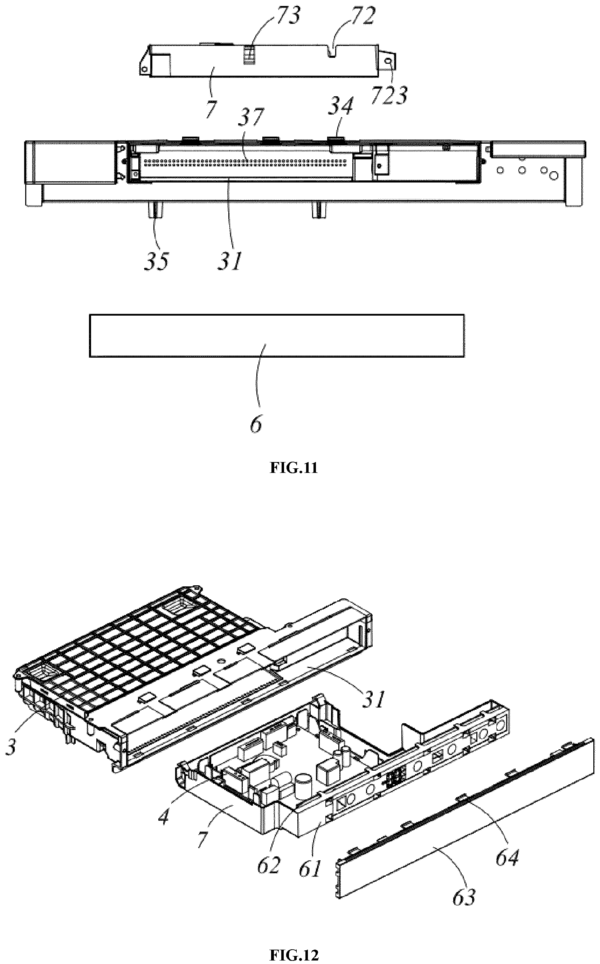

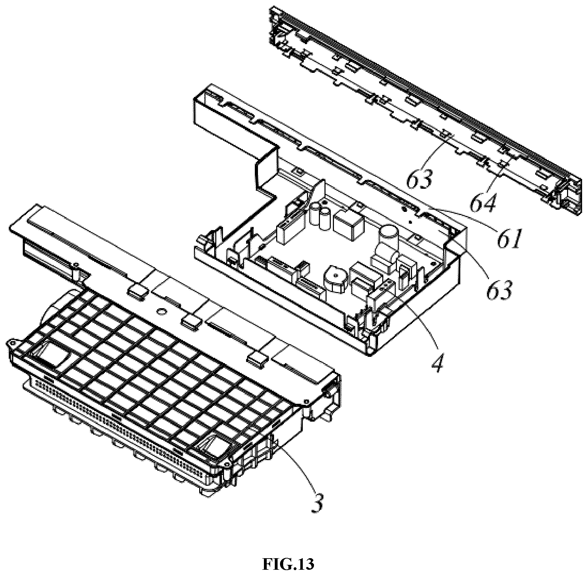

As shown in FIGS. 12 and 13 which show a second embodiment of the refrigerator of the present invention different from the first embodiment in that: the display control assembly 6 comprises a display control bracket 61 integrally formed on the front side of the mounting base 7, a display control circuit board 62 fixed on a rear side of the display control bracket 61, and a display control panel 63 covering a front side of the display control bracket 61.

That is, the front wall of the mounting base 7 and the display control bracket 61 are configured as the same structure, such that the master control board 4 and the display control circuit board 62 can be fixed conveniently, more materials are saved, and the cost is effectively reduced. In the present embodiment, the display control circuit board 62 is provided between the display control bracket 61 and the master control board 4 and located in the inner mounting cavity 71, such that the display circuit board can be directly connected with the master control board 4 in the inner mounting cavity 71, a distance between the display circuit board and the master control board is shorter, and the wire harness connecting the display circuit board and the master control board is not required to penetrate out of the mounting base 7 forwards, thereby reducing wire harness tidying difficulty.

In addition, since the display control panel 63 and the display control bracket 61 are also fixed together, during disassembly and repair, a fixing structure between the display control panel 63 and the mounting box 3 can be directly released, and then, the display control panel 63 can be directly pulled out. Therefore, the master control board 4 can be taken out in one step, and the repair steps are greatly simplified. Certainly, the premise is that the mounting base 7 and the mounting box 3 are fixed only by the above-mentioned positioning structure, the fixing tab 723 and the screw hole 315 of the mounting base 7 are not fixed by a screw, or the fixing tab 723 and the screw hole 315 are not necessarily provided.

In conclusion, in the present invention, the size of the part of the interior at the end of the mounting box 3 apart from the opening 31 is set to be less than the size of the part of the interior at the opening, and the mounting base 7 is limited at the end of the mounting box 3 apart from the opening. Therefore, during repair, when the mounting base 7 is pulled to be released, a large space is reserved between the mounting base 7 and the mounting box 3, such that the mounting base 7 can be taken out conveniently, thus facilitating repair of the master control board, greatly simplifying the repair step, reducing a repair time, and reducing the repair cost.

It should be understood that although the present specification is described based on embodiments, not every embodiment contains only one independent technical solution. Such a narration way of the present specification is only for the sake of clarity. Those skilled in the art should take the present specification as an entirety. The technical solutions in the respective embodiments can be combined properly to form other embodiments which can be understood by those skilled in the art.

A series of the detailed descriptions set forth above is merely specific description of feasible embodiments of the present invention, and is not intended to limit the protection scope of the present invention. Equivalent embodiments or modifications made within the spirit of the present invention shall fall within the protection scope of the present invention.

## Claims

1. A master control board mounting assembly, comprising:
a mounting box having a box body provided with an accommodating cavity and an opening provided on one side of the box body; and
a mounting base drawn from the opening in an opening direction of the opening and provided in the accommodating cavity, an inner mounting cavity for mounting a master control board being provided on the mounting base;
wherein in the opening direction, a size of a part of an interior at an end of the mounting box apart from the opening is less than a size of a part of the interior at the opening, and the mounting base is limited at the end of the mounting box apart from the opening.

2. The master control board mounting assembly according to claim 1, wherein the mounting box has a top wall, a bottom wall and two side walls which form the accommodating cavity, a step portion is formed on at least one side wall at the end of the mounting box apart from the opening and protrudes into the accommodating cavity, and the step portion is provided with an abutting portion laterally abutting against the mounting base and a guide inclined surface located on a side of the abutting portion close to the opening, so as to guide movement of the mounting base.

3. The master control board mounting assembly according to claim 2, wherein the mounting base is provided with an elastic portion elastically abutting against and fitted with the abutting portion.

4. The master control board mounting assembly according to claim 3, wherein the mounting base has a carrying bottom wall and two outer side walls extending upwards from two sides of the carrying bottom wall respectively, the elastic portion is configured as an elastic sheet integrally formed on the outer side wall, and a guide portion fitted with the guide inclined surface in a backward mounting and moving process of the mounting base is formed on a rear side of the elastic sheet.

5. The master control board mounting assembly according to claim 1, wherein the mounting box has a top wall, a bottom wall and two side walls which form the accommodating cavity, step portions are formed on the top wall and/or the bottom wall at the end of the mounting box apart from the opening and protrude into the accommodating cavity, and the step portion is provided with an abutting portion abutting against the mounting base and a guide inclined surface located on a side of the abutting portion close to the opening, so as to guide movement of the mounting base.

6. The master control board mounting assembly according to claim 5, wherein the mounting base is provided with an elastic portion elastically abutting against and fitted with the abutting portion.

7. The master control board mounting assembly according to claim 6, wherein the mounting base has a carrying bottom wall, two outer side walls extending upwards from two sides of the carrying bottom wall respectively, and a rear side wall, the elastic portion is provided at a corner between the outer side wall and the rear side wall, the mounting base is provided with a supporting wall provided in parallel with the rear side wall at the corner, and the elastic portion is formed at a top of the supporting wall and has a V shape which is opened downwards.

8. The master control board mounting assembly according to claim 2, wherein the step portions are formed on two side walls of the mounting box, a wire harness passing hole which is through laterally is formed in a front side of the step portion, a wiring port opposite to the wire harness passing hole is formed in the mounting base, and the wiring port is communicated with the inner mounting cavity.

9. The master control board mounting assembly according to claim 8, wherein the mounting base further comprises an outer mounting cavity provided beside the inner mounting cavity to accommodate a wire harness, inner vertical walls provided between the inner mounting cavity and the outer mounting cavity, a wire passing port provided between the inner vertical walls and a wire binding portion formed by protruding from an inner wall of the outer mounting cavity, and the wiring port is communicated with the inner mounting cavity through the outer mounting cavity and the wire passing port.

10. The master control board mounting assembly according to claim 9, wherein the outer mounting cavity surrounds two sides and a rear side of the inner mounting cavity and is located on a side adjacent to the wire harness passing hole of the mounting box, the outer mounting cavity comprises a first cavity adjacent to the outer side wall, a second cavity adjacent to the inner vertical wall, and a partition wall provided between the first cavity and the second cavity, the wiring port is provided on the outer side wall and communicated with the first cavity, the first cavity is communicated with a part of the outer mounting cavity adjacent to the rear side wall of the mounting base, the partition wall has a wiring groove communicating the first cavity with the second cavity, and the second cavity is communicated with the inner mounting cavity through the wire passing port between an end portion of the partition wall and one inner vertical wall.

11. The master control board mounting assembly according to claim 1, wherein the mounting base further has a supporting portion protruding from a bottom wall of the inner mounting cavity, limiting buckles oppositely arranged on an upper side of the supporting portion and a master control board fixing space formed between the supporting portion and the limiting buckles, and the limiting buckles are formed on an inner wall of the inner mounting cavity.

12. The master control board mounting assembly according to claim 1, wherein the mounting box further has a mounting portion provided at a position of the box body adjacent to the opening, the mounting portion is provided with screw holes, two sides of a front end of the mounting base are provided with fixing tabs protruding outwards, the fixing tabs are provided with fixing holes corresponding to the screw holes, and the master control board mounting assembly further comprises bolts fitted with the screw holes and the fixing holes.

13. A refrigerator, comprising a cabinet, a door located on a front side of the cabinet to open or close the cabinet, and the master control board mounting assembly according to any one of claims 1 to 12, wherein the master control board mounting assembly is provided in the cabinet or the door.
